Europäisches Patentamt

(19) European Patent Office    (11) Publication number: **0 063 403**

Office européen des brevets    **B2**

(12)    # NEW EUROPEAN PATENT SPECIFICATION

(45) Date of publication of the new patent specification:    (51) Int. Cl.⁴: **B 29 D 3/02**
10.08.88

(21) Application number: **82300151.6**

(22) Date of filling: **12.01.82**

(54) **Process of producing reinforced articles.**

(30) Priority: **16.04.81 GB 8112108**

(43) Date of publication of application:
**27.10.82 Bulletin 82/43**

(45) Publication of the grant of the patent:
**04.12.85 Bulletin 85/49**

(45) Mention of the opposition decision:
**10.08.88 Bulletin 88/32**

(84) Designated Contracting States:
**AT BE CH DE FR GB IT LI NL SE**

(56) References cited:
**DE-A-1 454 988
DE-A-2 642 330
DE-A-2 933 244
GB-A-1 060 422
GB-A-1 570 000
GB-A-2 015 416
GB-A-2 019 304
US-A-4 123 488
US-A-4 124 670**

(73) Proprietor: **IMPERIAL CHEMICAL INDUSTRIES
PLC, Imperial Chemical House Millbank, London
SW1P 3JF (GB)**

(72) Inventor: **Belbin, Geoffrey Raymond, 17 Turpins
Ride, Welwyn Herts (GB)**
Inventor: **Cattanach, James Buchan, 16 Willow
Grove, Welwyn Garden City Herts (GB)**

(74) Representative: **Downer, John Michael, Imperial
Chemical Industries PLC Legal Department:
Patents PO Box 6 Bessemer Road, Welwyn
Garden City Herts, AL7 1HD (GB)**

EP 0 063 403 B2

## Description

This invention relates to a process of producing polymeric shaped articles containing reinforcing fibres and to the articles so produced.

A wide variety of methods are available for producing polymeric shaped articles which contain fibrous reinforcement which thereby have improved strength, stiffness and performance characteristics. In a typical method the articles are formed from injection mouldable granules of a polymer which contains reinforcing fibres which have been introduced into a melt of the polymer in a compounding extruder. Glass fiber is usually used in such products and the average glass fibre length in the granular product is typically of the order of 0.5 mm or less. In this specification such products are termed "short glass" reinforced composition. Despite the short length of the glass fibres in such products, properties such as tensile strength and flexural modulus are considerably enhanced and such reinforced polymer granules find a wide range of applications. These compositions are widely used in the high productivity process of injection moulding. A disadvantage of the product is that because the reinforcing fibres are distributed essentially uniformly throughout any product formed from the granules there is no possibility of selectively reinforcing those portions of the shaped article which will be subject to greatest stress when the article is in use. Thus the fibrous reinforcement is not used as efficiently or as economically as it might be. Consequently the ratio of stiffness or strength provided by the reinforcement to the weight of the reinforcement is not maximised. Similarly, particularly in the case of expensive reinforcements, such as carbon fibres, the ratio of stiffness or strength to cost is not maximised.

Additionally, the process of injection moulding a "short glass" filled composition results in the fibre becoming preferentially aligned in the direction of flow of molten polymer so that the moulded articles show marked anisotropy, showing greater strength along the direction in which the fibres are aligned. This process of fibre alignment is essentially a random process controlled by the flow patterns in the mould so that it is not possible to provide selectively high reinforcement in a chosen portion of the article so produced. A further problem which arises with this type of product is that as the glass fibre content is increased, to try to achieve increased strength and other properties, the ease of processability drops off, particularly at glass fibre concentration in excess of 40 % by weight of the composition. The improvement in strength obtainable at high concentrations also appears to reach a limiting value. The compositions of the present invention enable higher mechanical properties to be obtained than with "short glass" reinforced compositions.

In a different prior art process reinforcing fibre can be disposed to a limited extent in those portions of a shaped article which are likely to be subject to greatest stress in use by a process in which glass fibres, particularly in the form of a coherent mat of long fibres are positioned in a mould cavity so that when a matrix material is introduced and hardened in the mould the resulting article contains selectively distributed fibre reinforcement. The latter process is restricted to a process in which the matrix material injected into the mould is of sufficiently low viscosity so that it can penetrate between the individual filaments of the reinforcement and wet them, so that a good bond between the final matrix polymer and the reinforcement is provided. It is totally unsatisfactory as a method of producing a reinforced thermoplastic article by introducing a melt of a thermoplastic polymer into a mould containing placed reinforcing fibres because not only will the melt fail to wet the reinforcing fibres sufficiently, but the high pressure behind the viscous melt is likely to sweep the placed fibres aside so that they are not eventually disposed in the desired portions of the final article.

It has previously been known to include preformed elements into thermoplastic mouldings in which the preformed element comprises reinforcing fibres wetted by a curable or cured thermosetting polymer. United States Patent Specification No. 4 123 488 discloses such a hybrid system.

An improved method has now been devised of producing thermoplastic shaped articles which are selectively reinforced to provide maximum strength in use.

Accordingly, there is provided a method of producing an injection moulded article provided with reinforcement in selected portions of the article comprising moulding a thermoplastic polymeric material in a mould cavity containing reinforcing material characterised in that the reinforcing material in the form of at least one preformed element comprising continuous aligned reinforcing fibres extending the length of the element and substantially totally embedded in a thermoplastic polymeric matrix is located in the mould and the thermoplastic mateial is subsequently introduced into the mould as a melt and is moulded around the preformed element so that the preformed element becomes an integral part of the final moulded article, the preformed element having sufficient form stability to enable it to be located and restrained in the mould cavity to provide reinforcement in preselected portions of the moulded article.

The invention not only permits the fibrous reinforcement to be located in the shaped article with maximum effect with respect to the stresses the shaped article will be subjected to in use but overcomes the processing problems involved in producing such articles. In particular the process can be used to produce such reinforced articles using the high productivity injection moulding process using conventional thermoplastic polymers with melt viscosities of 100 Ns/m$^2$ or more.

There is also provided a thermoplastic polymeric injection moulded article made according to the method of one of claims 1 to 4, comprising at least one fibre reinforcement in a selected portion of the article, characterised in that the fibre reinforcement is provided in the form of continuous aligned reinforcing fibres extending the length of said selected portion which fibres are substantially completely contacted by and embedded in thermoplastic polymer.

The preformed element containing continuous reinforcing fibres substantially completely contacted by and

2

embedded in thermoplastic polymer is distinct from the mats of fibres which have previously been used in thermosetting moulding technology. Although these prior art reinforcing mats may be impregnated with a polymeric binder to hold the fibres of the mat in a handleable package such impregnated mats have no form stability in the sense that they will not retain their shape when picked up. Form stability is only conferred on these mats when they become part of the cured, shaped article. In the preformed elements of the present invention the fibres have been impregnated with and are embedded within a polymeric resin to provide an element which is form stable at ambient temperatures. It is not necessary that this form stable element is rigid and in some circumstances it is advantageous if the element is pliable because this may make it more easily locatable in a desired position in the mould. A preferred preformed element for use in the present invention comprises a package of reinforcing fibres containing sufficient of a matrix polymer to give an element having an interlaminar shear strength of at least 5 MN/m$^2$ at room temperature.

The most important characteristic of the preformed element is that the fibres should be substantially completely contacted by the polymer. It is not essential that the element has this minimum interlaminar shear strength at the time that it is located in the mould. In fact, it may be advantageous in some applications to use the preformed element at a temperature at which it is readily pliable so that it can be more readily located in the mould, for example by winding the heat softened preformed element on a mould insert.

The moulding process used sould be a process in which a shaped article is formed from a thermoplastic polymeric material which is introduced into the mould as a melt, commonly known as injection moulding.

The preformed elements used in the process may be prepared by a number of techniques from continuous reinforcing fibres. Thus a continuous roving or tow consisting of a bundle of filaments, such as glass filaments, may be impregnated by a rigid polymer or prepolymer in liquid form. The liquid form of the polymer may be a solution, dispersion or melt of the polymer. The liquid form of the prepolymer will normally be a partially polymerised form of the polymer, such as a partially polymerised polymer in monomer syrup.

When it is necessary or desirable to use a melt of a thermoplastic polymer to impregnate the fibre, to produce the preform for use in the invention, difficulties arise if the melt is formed of a polymer of a molecular weight in the range normally required to confer adequate physical properties on the polymer. Thus the melt viscosities of conventional high molecular weight thermoplastics polymers are usually in excess of 100 Ns/m$^2$. Good wetting of the fibres with a melt of such high viscosity is very difficult to achieve. Whilst it is possible to reduce melt viscosity to some extent by increasing the melt temperature it is normally the case that an insufficient reduction is obtainable below the decomposition temperature of the thermoplastics polymer. Surprisingly, however, the use of a thermoplastics polymer of low enough molecular weight to give a sufficiently low melt viscosity to result in adequate fibre wetting gives a product of high strength.

Thus a thermoplastics polymer composition which has been obtained by drawing a roving consisting of a plurality of continuous filaments through a melt of the thermoplastics polymer having a melt viscosity below its decomposition temperature of less than 30 Ns/ms$^2$ and preferably between 1 and 10 Ns/m$^2$ whilst the filaments of the roving are separated and subsequently consolidating the filaments into a polymer impregnated lace gives a lace of high strength. The resulting reinforced elements are very suitable for use in the present invention, particularly where the polymeric material used in the moulding process is a conventional high molecular weight thermoplastics polymer.

Another suitable form of preformed element for use in the invention is a fibre-reinforced element containing a high molecuiar weight thermoplastics polymer such as described in British Patent Specification No. 1 334 702. In this specification there is described a process of producing a fibre-reinforced element by separating the continuous fibres in a fibre roving into bundles of filaments by wedging polymer powders between the bundles and subsequently drawing the powder impregnated roving through a hot die or tube to melt the polymer powder and consolidate the impregnated roving into a lace.

The continuous reinforcing fibres used in the present invention may be selected from glass fibres, carbon fibres, natural fibres such as jute and synthetic polymer fibres of high modulus. The choice of fibre will depend on a balance of the cost, the required physical properties and in the case of the polymer fibres whether they will withstand the processing conditions of introducing the flowable polymer when the polymer is a high temperature melt.

In the context of the present invention "continuous fibres" is deemed to mean continuous aligned fibres which extend longitudinally of the preformed element.

The preformed elements should preferably contain at least 20 %, and preferably at least 40 %, by weight of fibre based on the weight of the element.

The nature of the polymer of the preformed element will depend on the nature of the polymer in which it is to be incorporated to form the reinforced shaped article. The polymer forming the matrix around the fibres should be compatible with the polymer in which it is incorporated in the moulding process. Preferably the two polymers should have the same composition, although they need not have the same molecular weight.

The shape of the preformed element will depend on the mould in which it is to be located for the process of forming the reinforced shaped article. It may take the form of a solid or hollow rod, strip or sheet which can be located in a desired position in the mould. The major advantage of preformed elements formed from thermoplastic polymers is that they can be converted into shaped elements having a shape suitable for insertion into a particular mould by heating the elements to a temperature above the softening point of the matrix polymer. This allows much greater freedom in the design of the preformed element to be inserted into the mould because the elements can be fabricated into elements of complex shape. For example, the flexible elements can be wound onto formers of a shape that provide the reinforcement in the required areas when the reinforced former becomes part of the final shaped article.

The process of moulding a molten thermoplastic polymer around a preformed element can set up significant internal strain in the final shaped article as the melt cools. When the shaped article contains at least one preformed element the effect of the contracting forces can result in the strain being transferred to the rigid element so that it is under compression. The strain induced can be so severe that the final article takes up a warped shape when removed from the mould.

This problem can be overcome by proper positioning of the elements in the mould so that the contraction forces acting on the elements are balanced. Thus in a preferred embodiment of the invention the thermoplastic polymer is moulded as a melt and the preformed reinforcing element or elements are symmetrically disposed with respect to the contraction forces arising when the polymer melt is cooled.

The location of the preformed elements in the mould to give this symmetrical disposition with respect to the contraction forces will depend on the shape of the article to be produced and on the portions of the shaped article where reinforcement is required. For articles of reasonably constant cross section the elements may be symmetrically disposed about an axis of the shaped article, the elements being essentially parallel to the axis. For articles of more complex shape it may be necessary to determine the configuration of elements necessary in a warpfree article by a process of trial and error.

The preformed elements may be positioned in the desired placement in the mould by a variety of methods. When the reinforcement is required in the surface of the shaped article the elements may be attached to the surface of the mould by adhesion using double-sided adhesive tape or a surface applied adhesive. Alternatively, the elements may be located in the mould by mechanical or vacuum means. In those cases where the mould is provided with a moulding core which is removed after the article is moulded the preformed elements may be attached to or wound on the moulding core.

The flowable polymer which is moulded around the preformed elements may comprise any polymer or blend of polymers which will adhere to the preformed element insert. Thus the flowable polymer may be any thermoplastic polymer, optionally containing any of the conventional auxiliary materials conventionally used, such as stabilisers, pigments, processing aids, fire retardants and fillers. The fillers may be of the particulate non-reinforcing type or may contribute additional reinforcement to the article. In particular there may be present fibrous materials less than 2 mm in length which will provide reinforcement in addition to that provided by the selectively disposed rigid elements containing continuous fibres. Thus suitable materials for moulding around the preformed elements include the "short glass" reinforced compositions.

The portions of the shaped article which are to be reinforced will depend on the ultimate use of the article and the environmental forces to which it is to be subjected. Thus articles subject to bending forces benefit from having the reinforcement localised in or near the surface of the article and with the fibres lying in a direction corresponding to the stresses involved through application of the bending force. For articles where resistance to torsional stresses are required the reinforcement may be present near the outer surface of the article, preferably being applied at an angle of about 45° to the longitudinal axis of the article, using filament winding techniques known in the art.

In relation to reinforcement processes in which the conventional "short glass" reinforced compositions are used other benefits which arise from the use of the present invention include the more economic use of the plastics material in an article by allowing thinner sections of equivalent strength to be obtained, or by the use of foams or hollow sections of equivalent strength. In addition cheaper lower-performance plastics may be used. Furthermore, the problem of weak weld lines which can occur when the faces of two flows of polymer meet in filling a mould can be overcome if the local reinforcement in the shaped article bridges any weld line produced. The anisotropy observed resulting from flow orientation of short fibres can also be avoided or compensated for by use of the present invention. A further advantage over the use of conventional injection moulded "short glass" reinforced products is that a higher unit stiffness can be obtained in a given mould cycle time. This arises because (a) of the thinner sections which can be used for a given strength (cooling time depends on the square of the thickness), (b) because the material injected into the mould may be an unfilled polymer (considerably lower in viscosity than reinforced polymer) and (c) because the preformed elements in the mould can act as heat sinks to take up heat from the injected molten materials.

The process of the present invention also provides greater toughness than obtained on moulding products from "short glass" reinforced products. Furthermore, the balance of stiffness and toughness is much more favourable than in the case of the "short glass" products, especially when considered in terms of designing products with a guaranteed safe performance with respect to a particular application or requirement.

As previously indicated a major benefit of the invention is that articles can be produced having high stiffness at low weight. At present the benefit of using the low density high strength carbon fibres is only made use of in applications which can bear a high cost such as in premier sporting equipment and aircraft or space vehicle parts. The present invention allows such fibres to be used more economically in more conventional applications such as the automotive industry.

It also allows articles currently being made from carbon fibres for the aforementioned premium applications to be made more economically. For example, tennis rackets are currently being made according to the process described in British Patent Specification No. 2 015 886. In this process a hollow racket is produced using a meltable metal alloy core. The core is held in a mould and a carbon-fibre-filled nylon composition is injection moulded around the core. The meltable core is subsequently removed by heating the assembly to above the

4

melting point of the alloy. Carbon fibres may be employed more efficiently according to the present invention by first producing a polymer impregnated strip which can either be inserted in the mould to provide reinforcement for both faces of the racket frame or may be wound in a heat-softened condition around the alloy core to provide the necessary stiffness. The polymer injected into the mould may then be an unreinforced polymer.

The invention is further illustrated with reference to the following examples.

**Example 1**

A series of injection moulded samples were produced using a Turner 803 Injection Moulding Machine, (CTA-2-80S) using a mould cavity of dimensions 145 mm x 12.5 mm x 6.4 mm. A comparison was made between mouldings containing preformed glass-fibre reinforced thermoplastic strips and identical mouldings not containing the strips. In the cases where reinforcing strips were included in the mouldings they were produced by locating them on each 145 mm x 12.5 mm surface of the cavity using doublesided adhesive tape. The composition of the mouldings produced and the test results are summarised in the Table below.

**Table**

| | | | | Impact absorbed energy Nm (8) | |
|---|---|---|---|---|---|
| Run | Composition of test bars (1) | % Glass w/w | Flexural GN/m$^2$ (7) | Onset of failure | Failure at 25 mm mid-span deflection |
| A | Unreinforced polypropylene (1) | 0 | 0.9 | 2.5 | 5.3 |
| B | 30 % short-fibre reinforced polypropylene (2) | 30 | 5.1 | 2.7 | 2.7 (brittle) |
| C | As A + preformed inserts (3) | 49.4 | 11.6 | 0.6 | 11.8 |
| D | As B + preformed inserts (3) | 58.7 | 15.7 | 1.4 | 14.7 |
| E | Unreinforced polyethylene terephthalate (PET) (4) | 0 | 2.3 | | |
| F | 30 % short-fibre reinforced PET (5) | 30 | 7.1 | | |
| G | As E + preformed inserts (6) | 29 | 17.5 | | |
| H | As F + preformed inserts (6) | 44 | 16.9 | | |

(1) 'Propathene' grade GWN 101. Extruder barrel tempertures 240°C (feed), 250°C, 250°C, 250°C (delivery). Mould cooled with water at 20°C.

(2) 'Propathene' grade HW60 GR30. Extruder barrel temperatures 260°C (feed), 270°C, 270°C, 270°C (delivery). Mould cooled with water at 20°C.

(3) The reinforcing strips consist of 80 % w/w continuous glass fibre contained in polypropylene of MFI = 100 @ (measured at 230°C using 2.16 kg load according to ASTM D 1238. Each strip is 145 x 10.2 x 1.9 mm.

(4) Polyethylene terephthalate of intrinsic visocity 0.625 measured at 25°C in o-chlorophenol as a 1 % weight/volume solution. Extruder barrel temperatures 265°C (feed), 275°C, 275°C, 270°C (delivery). Mould cooled with water at 20°C.

(5) A glass-reinforced composition containing the PET described in (4) together with 30 % by weight of the composition of short-glass fibres. Extruder and mould conditions as in (4).

(6) The reinforcing strips consist of 68 % w/w continuous glass fibre contained in polyethylene terephthalate of intrinsic viscosity 0.32 as in (4). Each strip is 145 x 11.8 x 0.8 mm.

(7) Measured by 3 point flexure heat with a support span of 81 mm, a load applied to the 145 x 12.5 mm face at mid-span, and a mid-span deflection rate of 8 mm s/min. All machine/bar contacts via 4 mm radius surfaces. A permanent record is made of the load-deformation behaviour at mid-span, and the fiexural modulus calculated by drawing a tangent to the steepest initial straight-line portion of the load-deformation curve, using the external cross-section dimensions of the individual bars.

(8) Measured by Instrumented Falling Weight Test on a bar sample. The sample is supported on a span of 70 mm and is impacted on the 145 x 12.5 mm face at mid-span by dropping a 30° wedge impactor having a weight of 100 N and having a 2 mm radius striking edge. The impactor is dropped from a height such that the velocity at impact is 3 metres/sec. A force transducer is connected to the impactor to give a record of the load on the specimen during the time that it is deformed by the impactor. A permanent record is made of the load-deformation behaviour and the impact energies are calculated from the areas under this curve. "Onset of failure" refers to the energy value corresponding to the highest recorded load value.

"Failure at 25 mm mid-span deflection" refers to the lesser of the energy values given by these conditions.

**Example 2**

The procedure of Example 1 was repeated to assess the effect of the preformed elements on reducing sink marks in mouldings. The sample identified as Run A in Example 1 showed pronounced sinking. The nominal section 12.5 mm x 5.4 mm thick was found to have an actual thickness of 5.7 mm at the centre of the 12.5 mm span. Similarly the sample identified as sample B was found to have a thickness of 5.5 mm at the centre point of the reinforced span as against the nominal 6.4 mm. The samples identified as Runs C and D were found to show no significant deviation from the nominal 6.4 mm thickness.

The procedure was repeated with the samples identified as runs E, F, G and H in Example 1. The actual thickness observed at the centre of the spans were 6.2 mm, 6.1 mm, 6.4 mm and 6.4 mm respectively.

**Claims**

1. A method of producing an injection moulded article provided with reinforcement in selected portions of the article comprising moulding a thermoplastic polymeric material in a mould cavity containing reinforcing material characterised in that the reinforcing material in the form of at least one preformed element comprising continuous aligned reinforcing fibres extending the length of the elements and substantially totally embedded in a thermoplastic polymeric matrix is located in the mould and the thermoplastic material is subsequently introduced into the mould as a melt and is moulded around the preformed element so that the preformed element becomes an integral part of the final moulded article, the preformed element having sufficient form stability to enable it to be located and restrained in the mould cavity to provide reinforcement in preselected portions of the moulded article.

2. A method according to claim 1 characterised in that the preformed reinforcing element or elements are symmetrically disposed with respect to the contraction forces arising when the polymer melt is cooled.

3. A method according to either claim 1 or 2 in which the preformed element has an interlaminar shear strength at room temperature of at least 5 MN/m$^2$.

4. A method according to claim 3 in which the thermoplastic polymer of the preformed element has a melt viscosity of less than 30 Ns/m$^2$ measured at a temperature below the polymer decomposition temperature.

5. A thermoplastic polymeric injection moulded article made accordig to the method of one of claims 1 to 4, comprising at least one fibre reinforcement in a selected portion of the article, characterised in that the fibre reinforcement is provided in the form of continuous aligned reinforcing fibres extending the length of said selected portion, which fibres are substantially completely contacted by and embedded in thermoplastic polymer.

6. A thermoplastic polymeric injection moulded article according to claim 5 in which the reinforcing fibres are embedded in and directly surrounded by a thermoplastic polymer that differs from the thermoplastic polymer out of which the rest of the mould-shaped article is made.

7. A thermoplastic polymeric injection moulded article according to claim 5 or 6 in which the fibre reinforcements are disposed within the shaped article at positions which are symmetrically disposed with respect to the contraction forces arising when the articie cools from the melt.

8. A thermoplastic polymeric injection moulded article according to one of claims 5 to 7 in which the reinforcing fibres are embedded in and directly surrounded by a thermoplastic polymer having a melt viscosity of less than 30 Ns/m$^2$ measured below the decomposition temperature of said polymer.

9. A thermoplastic polymeric injection moulded article according to claim 8 in which the thermoplastic polymer out of which that part of the article is made which does not directly surround the reinforcing fibres has a melt viscosity in excess of 100 Ns/m$^2$ measured below the decomposition temperature of said polymer.

**Patentansprüche**

1. Verfahren zum Herstellen eines spritzgegossenen Formkörpers, der in ausgewählten Bereichen des Formkörpers verstärkt ist, bei dem ein thermoplastisches polymeres Material in einer Verstärkungsmaterial enthaltenden Formhöhlung geformt wird, dadurch gekennzeichnet, daß das Verstärkungsmaterial in Gestalt von mindestens einem vorgeformten Bauteil, das kontinuierliche, ausgerichtete Verstärkungsfasern enthält, die sich in Längsrichtung der Bauteile erstrecken und im wesentlichen vollständig in einer thermoplastischen polymeren Matrix eingebettet sind, in der Form engeordnet und das thermoplastische Material dann als Schmelze in die Form eingeführt und um das vorgeformte Bauteil herum geformt wird, so daß das vorgeformte

6

Bauteil ein integrierender Bestandteil des fertigen Formkörpers wird, wobei das vorgeformte Bauteil eine ausreichende Formbeständigkeit hat, damit es in der Formhöhlung mit Bewegungseinschränkung angeordnet werden kann, um in vorgewählten Bereichen des Formkörpers eine Verstärkung bereitzustellen.

2. Verfahren nach Anspruch 1, dadurch gekennzeichnet, daß das (oder die) vorgeformte(n) Verstärkungsteil(e) in bezug auf die Kontraktionskräfte, die auftreten, wenn die Polymerschmelze abgekühlt wird, symmetrisch angeordnet wird (werden).

3. Verfahren nach Anspruch 1 oder 2, bei dem das vorgeformte Bauteil eine Spalt- bzw. Interlaminarscherfestigkeit von mindestens 5 MN/m$^2$ bei Raumtemperatur hat.

4. Verfahren nach Anspruch 3, bei dem das thermoplastische Polymer des vorgeformten Bauteils eine bei einer unterhalb der zersetzungstemperatur des Polymers liegenden Temperatur gemessene Schmelzviskosität von weniger als 30 Ns/m2 hat.

5. Thermoplastischer polymerer spritzgegossener Formkörper, hergestellt gemäß dem Verfahren nach einem der Ansprüche 1 bis 4, der in einem ausgewählten Bereich des Formkörpers mindestens eine Faserverstärkung aufweist, dadurch gekennzeichnet, daß die Faserverstärkung in Gestalt von kontinuierlichen, ausgerichteten Verstärkungsfasern, die sich in Längsrichtung des erwähnten ausgewählten Bereichs erstrecken, vorliegt, wobei diese Fasern im wesentlichen vollständig durch thermoplastisches Polymer berührt werden und darin eingebettet sind.

6. Thermoplastischer polymerer spritzgegossener Formkörper nach Anspruch 5, bei dem die Verstärkungsfasern in einem thermoplastischen Polymer, das von dem thermoplastischen Polymer, aus dem der Rest des Formkörpers hergestellt ist, verschieden ist, eingebettet und direkt davon umgeben ist.

7. Thermoplastischer polymerer spritzgegossener Formkörper nach Anspruch 5 oder 6, bei dem die Faserverstärkungen innerhalb des Formkörpers an Stellen angeordnet sind, die in bezug auf die Kontraktionskräfte, die auftreten, wenn der Formkörper von der Schmelze ausgehend abgekühlt wird, symmetrisch angeordnet sind.

8. Thermoplastischer polymerer spritzgegossener Formkörper nach einem der Ansprüche 5 bis 7, bei dem die Verstärkungsfasern in einem thermoplastischen Polymer, das eine bei einer unterhalb der Zersetzungstemperatur des Polymers liegenden Temperatur gemessene Schmelzviskosität von weniger als 30 Ns/m$^2$ hat, eingebettet und direkt davon umgeben sind.

9. Thermoplastischer polymerer spritzgegossener Formkörper nach Anspruch 8, bei dem das thermoplastische Polymer, aus dem derjenige Teil des Formkörpers, der die Verstärkungsfasern nicht direkt umgibt, hergestellt ist, eine bei einer unterhalb der zersetzungstemperatur des Polymers liegenden Temperatur gemessene Schmelzviskosität von mehr als 100 Ns/m$^2$ hat.

## Revendications

1. Procédé pour la production d'un article ou objet moulé par injection muni d'un renforcement dans des parties sélectées de l'article ou objet, consistant à mouler une matière polymère thermoplastique dans une cavité de moule contenant une matière de renforcement, caractérisé en ce que la matière de renforcement sous la forme d'au moins un élément préformé comportant des fibres de renforcement alignées continues se prolongeant sur la longueur des éléments et noyées de façon sensiblement complète dans une matrice polymère thermoplastique est placée dans le moule et la matière thermoplastique est ensuite introduite dans le moule à l'état fondu et est moulée autour de l'élément préformé de telle sorte que celui-ci fait corps avec l'article moulé final, l'élément préformé ayant une stabilité de forme suffisante pour lui permettre d'être positionné et retenu dans la cavité du moule pour fournir un renforcement dans des parties présélectées de l'article ou objet moulé.

2. Procédé suivant la revendication 1, caractérisé en ce que l'élément ou les éléments de renforcement préformés sont disposés symétriquement par rapport aux forces de contraction engendrées quand la masse en fusion de polymère est refroidie.

3. Procédé suivant la revendication 1 ou 2, suivant lequel l'élément préformé a une résistance au cisaillement entre strates à la température ambiante d'au moins 5 MN/m$^2$.

4. Procédé suivant la revendication 3, suivant lequel le polymère thermoplastique de l'élément préformé a une viscosité en fusion inférieure à 30 Ns/m$^2$ mesurée à une température inférieure à la température de décomposition.

5. Article ou objet polymère thermoplastique moulé par injection préparé selon le procédé de l'une des revendications 1 à 4, comprenant au moins un renforcement en fibres dans une partie sélectée de l'article, caractérisé en ce que le renforcement en fibres est présent sous la forme de fibres de renforcement alignées continues se prolongeant sur la longueur de cette portion, lesquelles fibres sont de façon sensiblement complète en contact avec et noyées dans le polymère thermoplastique.

6. Article ou objet polymère thermoplastique moulé par injection suivant la revendication 5, dans lequel les fibres de renforcement sont noyées dans et directement entourées par un polymère thermoplastique qui diffère du polymère thermoplastique constituant le reste de l'article conformé par moulage.

7. Article ou objet polymère thermoplastique moulé par injection suivant la revendication 5 ou 6, dans lequel les renforcements en fibres sont disposés à l'intérieur de l'article conformé dans des positions qui sont réparties symétriquement par rapport aux forces de contraction engendrées quand l'article refroidit à partir d'une condition de fusion.

8. Article ou objet polymère thermoplastique moulé par injection suivant l'une quelconque des revendications 5 à 7, dans lequel les fibres de renforcement sont noyées dans et directement entourées par un polymère thermoplastique ayant une viscosité en fusion inférieure à 30 Ns/m$^2$, mesurée au-dessous de la température de décomposition de ce polymère.

9. Article ou objet polymère thermoplastique moulé par injection suivant la revendication 8, dans lequel le polymère thermoplatique constituant la partie de l'article qui n'entoure pas directement les fibres de renforcement a une viscosité en fusion supérieure à 100 Ns/m$^2$, mesurée au-dessous de la température de décomposition de ce polymère.